# EUROPEAN PATENT APPLICATION

(11) **EP 0 875 361 A2**
(43) Date of publication of application: **04.11.1998**
(21) Application number: 98107677.1
(22) Date of filing: 28.04.1998
(51) Int. Cl.: B29C 63/04

(54) **Method and apparatus for covering items**

(30) Priority: 28.04.1997 IT OR970001
(71) Applicant: Sedda, Giovanni Antonio, 09170 Oristano (IT)
(72) Inventor: Sedda, Giovanni Antonio, 09170 Oristano (IT)
(74) Representative: Luppi, Luigi

(57) **Abstract**

The method for covering a surface (2) of an item (3) comprises applying a covering material (4) at a part (21a) of said surface (2) and modelling said material (4) so as to make it have the form of the remaining parts (21b, 21c) of said surface (2); the apparatus (1) for covering a surface (2) of an item (3) comprises applying means (15), suitable for applying a covering material (4) to a part (21a) of said surface (2), modelling means (9), suitable for modelling said material (4) to the remaining parts (21b, 21c) of said surface (2).

## Description

The invention concerns a method and an apparatus for covering portions of surfaces of items, in particular edges of doors. A door has, in respective edges, an irregular extension, along a transversal direction, to define an abutment co-operating with corresponding sides of a frame which covers surfaces defining an opening which has to be closed by the door.

In the prior art, such edges are covered, for example, with laminated PVC which are applied to surface portions which define the edge. This is achieved by glueing a strip of such material at a first part of surface of the edge and trimming the strip to make its area correspond to that of the part of surface whereto it has been glued. Such operation is repeated for any part of surface of which each edge of the door is constituted. Therefore there is a great waste of covering material due to the trimming, and a great waste of time because of the high number of operations necessary to produce the whole covering.

Aim of the present invention is to improve the pre-existent systems for covering edges of doors.

In a first aspect of the present invention, there is provided a method for covering a surface of an item, comprising:
- applying a covering material at a part of said surface;
- modelling said material so as to make it have the form of the remaining parts of said surface.

In a second aspect of the present invention, there is provided an apparatus for covering a surface of an item, comprising applying means, suitable for applying a covering material to a part of said surface, modelling means, suitable for modelling said material to the remaining parts of said surface.

Then the covering material is trimmed only along the outline of the edge of the doors, thus saving a great quantity of such material. Moreover, there is a reduction of the time necessary to produce the covering since the method above mentioned is performed just once for each edge and not for each and every parts of which each edge is constituted.

In a third aspect of the present invention, there is provided a method for covering a surface of an item, characterized in that, during said covering, said item is kept substantially vertically, with said surface facing upwards.

In a forth aspect of the present invention, there is provided an apparatus for covering a portion of surface of an item, characterized in that it comprises means suitable to keep said item substantially vertically, with said surface facing upwards.

In a fifth aspect of the present invention, there is provided a method for covering a first surface of an item, characterized in that, during said covering, said item is moved by moving means which act on a second surface of said item opposite to said first surface.

In a sixth aspect of the present invention, there is provided an apparatus for covering, by covering means, a first surface of an item, characterized in that it comprises moving means suitable to move said item acting on a second surface of said item opposite to said first surface.

In a particularly advantageous embodiment, the mutual distance between the covering means and the supporting and moving means may be varied, therefore making it possible to produce the covering on doors of various dimensions.

The invention will be better understood and carried into practice with reference to the enclosed drawings, showing some exemplary but not restrictive embodiments of it, wherein:
Figure 1 is a perspective view of an apparatus according to the invention;
Figures 2 to 6 show subsequent phases of a process to produce a covering according to the invention.

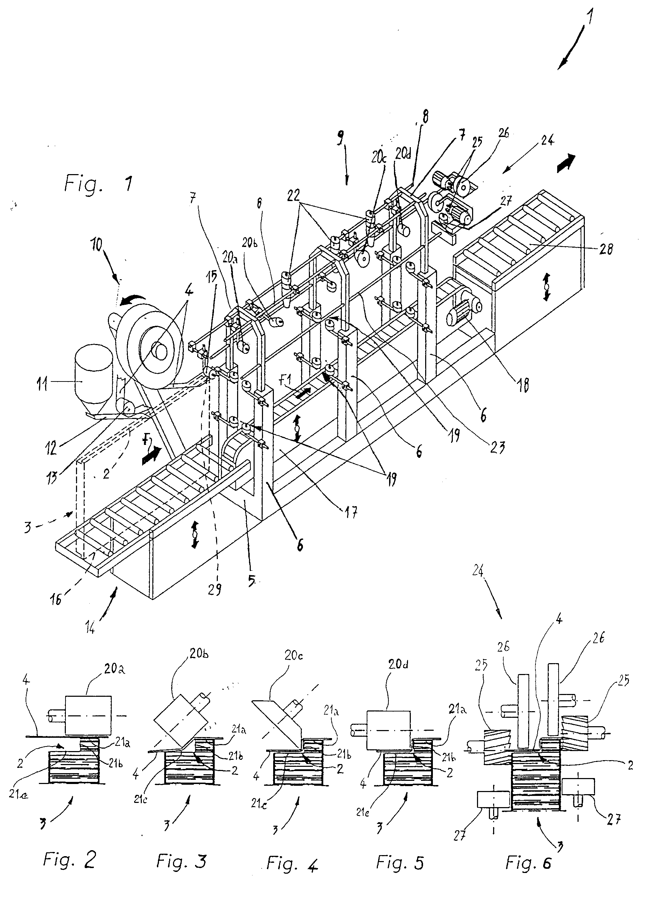

An apparatus 1 for covering an edge 2 of a door 3 with a covering material 4, comprises a base 5 wherewith a plurality of pairs of uprights 6 is coupled; the pairs 6 support bridges 7 which support horizontal rods 8, which, in turn, support modelling means 9 suitable to model the material 4 to irregularities of the edge 2. The material 4 may be strip material which can be adhesive, and in this case it is applied directly to the edge 2 by unwinding it from a reel 10; whereas, if the strip 4 is not adhesive, some glue is applied on one face thereof taking it from a container 11 making it drop along a chute 12 whereon the face of the strip 4 which has to be applied on the edge 2 is passed by a roller 13. Underneath the reel 10 there is an inlet roller-plate 14 suitable to slidably support the door 3, in a further edge 16, opposite to the edge 2, during a first phase of covering wherein the material 4 is applied to a summit 29 of the door 3 by an operator, and pressed, by a pressing roller 15, to the edge 2. The door 3 is then advanced, along a direction shown by the arrow F, by the operator on a conveyor belt 17 located above the base 5; the conveyor belt 17, driven by an engine 18, allows the moving of the door 3, along a direction shown by arrow F1. During this phase, pairs of guiding rollers 19, coupled with the uprights 6 keep the door 3 in a vertical and centred position. The modelling means 9, coupled with the rods 8, comprise, in succession, the rollers shown in Figures 2 to 5: a first roller 20a produces the adhesion of the material 4 to a first part 21a of the edge 2 which is horizontal and upper (duiring this phase); a second roller 20b produces a first phase of bending of the material 4 in order to make it adhere to a second part 21b of the edge 2 which is vertical; a third roller 20c ends the phase of bending of the material 4; a forth roller produces the adhesion of the material 4 to a third part 21c of the edge 2 which is horizontal, lower and connected to the first part 21a by means of the second part 21b. Also devices 22 for emanating hot air are advantageously coupled with the rods 8 to facilitate the adhesion of the material 4 to the edge 2. Further rods 23 are coupled with the bridges 7, said further rods supporting, at one end thereof located in an outlet zone of the door from the modelling means 9, trimming means 24 comprising a pair of cutters (Figure 6) suitable to trim the material 4 along the respective sides of outline of the edge 2. Each cutter 25 is positioned by a vertical positioning roller 26 and a horizontal positioning roller 27; such rollers 26, 27 are coupled with the respective cutter 25 and kept in contact with the door 3 by elastic means not shown. The conveyor belt 17, continuing to move the door 3, send it on an outlet roller-plate 28 wherefrom the operator may catch the door 3. The inlet roller-plate 14, the conveyor belt 17 and the outlet roller-plate 28 are advantageously height-adjustable to allow the trimming of doors of various dimensions. Moreover the modelling means 9 may comprise a number of rollers different from that described to model the material 4 with an edge 2 having different extension different from that shown in Figures. Rotating and re-positioning means not shown may advantageously be provided to rotate the door 3, caugh from the outlet roller-plate 28, and re-position it onto the inlet roller-plate 14 to perform the covering on another edge of the door 3.

## Claims

1. Method for covering a surface (2) of an item (3), comprising:
- applying a covering material (4) at a part (21a) of said surface (2);
- modelling said material (4) so as to make it have the form of the remaining parts (21b, 21c) of said surface (2).

2. Method according to claim 1, wherein said applying comprises applying said material in excess with respect to the extension of said surface.

3. Method according to claim 2, wherein, after said modelling there is provided by trimming said material (4) along an outline of said surface (2).

4. Method according to any preceding claim, and further comprising keeping said item (3) substantilly vertical, with said surface (2) facing upwards.

5. Method according to any preceding claim, wherein said modelling takes place by moving said item (3) via moving means (17) acting on a further surface (16) of said item (3).

6. Method according to claim 5, wherein said moving means (17) are adjusted in height according to the dimensions of the item (3) to be covered.

7. Method according to any one of claims 1 to 5, wherein said modelling takes place by modelling means (9) which are adjusted in height according to the dimensions of the item (3) to be covered.

8. Method according to any preceding claim, and further comprising rotating said item (3) and replacing it so as to allow that another surface thereof may be covered.

9. Method according to any preceding claim, wherein said applying comprises applying just one strip of said material (4).

10. Apparatus (1) for covering a surface (2) of an item (3), comprising applying means (15), suitable for applying a covering material (4) to a part (21a) of said surface (2), modelling means (9), suitable to model said material (4) to the remaining parts (21b, 21c) of said surface (2).

11. Apparatus (1) according to claim 10, and further comprising trimming means (24), suitable for trimming said material (4) along an outline of said surface (2).

12. Apparatus (1) according to claim 10, or 11, and further comprising positioning and guding means (19) suitable to keep said item (3) substantially vertical, with said surface (2) facing upwards, at least during the action of said modelling means (9).

13. Apparatus (1) according to any one of claims 10 to 12, and further comprising moving means (17) suitable for moving said item (3), said modelling means (9) being located above said moving means (17).

14. Apparatus (1) according to claim 13, wherein said moving means (17) are adjustable in height.

15. Apparatus (1) according to any one of claims 10 to 14, wherein said modelling means (9) are adjustable in height.

16. Apparatus (1) according to any one of claims 10 to 14, wherein said applying means comprise at least one pressing roller (15).

17. Apparatus (1) according to any one of claims 10 to 16, wherein said modelling means (9) comprise modelling rollers (20b, 20c) suitable for modelling said material (4) along boundary lines separating adjacent parts (21a, 21b, 21c) of said surface, and adhesion rollers (20a, 20d) suitable for making said material (4) adhere to said parts (21a, 21c).

18. Apparatus (1) according to anyone of claims 10 to 17, and further comprising, near said modelling means (9), heating means (22) suitable to facilitate adhesion of said material (4) to said surface (2).

19. Apparatus (1) according to claim 11, wherein said trimming means (24) comprise a pair of cutters (25) suitable for trimming said material (4) along respective sides of outline of said surface (2).

20. Apparatus (1) according to claim 19, wherein each cutter (25) of said pair of cutters is positioned by a vertical positioning roller (26) and a horizontal positioning roller (27) coupled with the respective cutter (25) and kept in contact with said item (3) by elastic means.

21. Apparatus (1) according to any one of claims 10 to 20, and further comprising rotating and replacing means suitable for rotating said item (3) and replace it under said applying means (15) to cover a different surface.

22. Method for covering a surface (2) of an item (3), characterized in that, during said covering, said item (3) is kept substantially vertically, with said surface (2) facing upwards.

23. Apparatus (1) for covering a portion of surface (2) of an item (3), characterized in that it comprises means (19) suitable for keeping said item (3) substantially vertically, with said surface (2) facing upwards.

24. Method for covering a first surface (2) of an item (3), characterized in that, during said covering, said item (3) is moved by moving means (17) which act on a second surface (16) of said item (3) opposite to said first surface (2).

25. Method according to claim 24, wherein said moving means (17) are adjusted in height to cover items (3) of various dimensions.

26. Method according to claim 24, wherein the covering takes place by covering means (9, 15, 24) which are adjusted in height to cover items (3) of various dimensions.

27. Apparatus (1) for covering, by covering means (9, 15, 24), a first surface (2) of an item (3), characterized in that it comprises moving means (17) suitable for moving said item (3) acting on a second surface (16) of said item (3) opposite to said first surface (2).

28. Apparatus (1) according to claim 27, wherein said moving means (17) are adjustable in height.

29. Apparatus (1) according to claim 27, wherein said covering means (9, 15, 24) are adjustable in height.
